# EUROPEAN PATENT APPLICATION

(11) **EP 4 586 471 A1**
(43) Date of publication of application: **16.07.2025**
(21) Application number: 24221483.1
(22) Date of filing: 19.12.2024
(51) Int. Cl.: H02K 5/20, H02K 9/19

(54) **INTEGRATED LATTICE STRUCTURE IN HOUSING FOR COOLING AN ELECTRIC GENERATOR**

(30) Priority: 09.01.2024 IN 202411001576; 27.02.2024 US 202418588904
(71) Applicant: Honeywell International Inc., Charlotte, NC 28202 (US)
(72) Inventor: SUDHAHAR, Paul, Charlotte 28202 (US); M, Thangadurai, Charlotte 28202 (US); KANAKAGIRI, Girish, Charlotte 28202 (US)
(74) Representative: LKGlobal UK Ltd.

(57) **Abstract**

A housing is provided. The housing may include a hollow cylindrical body having an interior surface. A device may include a cooling channel including a lattice structure integrated in the hollow cylindrical body adjacent to the interior surface, the lattice structure configured to receive a cooling fluid.

## Description

### CROSS-REFERENCE TO RELATED APPLICATIONS

This application claims the benefit of priority to Indian Patent Application No. 202411001576, filed on January 9, 2024, of the same title, which is hereby incorporated herein by reference in its entirety.

### BACKGROUND

During the last several years there has been an increased demand for power generating systems that can produce high-power in the range of 200 to 1,000 kilowatts (kW). A large portion of this demand has been driven by the increased electrification in aerospace applications and hybrid electric propulsion for aerospace and ground vehicles. At the same time, these applications require low weight and size (volume). To improve the impact of the cooling system on the size and weight of the power generation system, designers attempt to increase the efficiency of the power generation system to thereby manage heat produced during operation.

Commonly, oil is used for cooling power generation systems. Typically, the generators are spray-cooled, conduction cooled or a combination of both spray and conduction cooling. The spray cooling technique provides good heat extraction, but it has the disadvantage that it increases the windage losses in the generator. This is caused by the oil being in contact with the rotor components that rotate at very high speeds.

For a high efficiency megawatt class generator, a combination of conduction cooling of the rotor and stator back-iron, and spray-cooling of the stator end turns is desirable. However, at megawatt power levels and with the high frequency required for a power dense generator, there are additional iron and copper losses that make the traditional methods of heat extraction ineffective.

Traditional methods of cooling the stator back-iron of electric machines supply oil to a channel that wraps as a spiral/channel around the stator back-iron. Unfortunately, current designs of such cooling systems do not provide sufficient heat transfer within the size and weight constraints to be effective at the higher power ranges while maintaining a compact package and high-power density. As high-power generators are designed to be longer, rather than square in shape, heat transfer within the compact size and weight constraints becomes even more important.

Thus, there is a need in the art for a cooling technique that removes sufficient heat from a power generation system that operates in a high-power range such as 200 to 1000 kW while also satisfying the size and weight constraints of these systems.

### SUMMARY

A housing for an electric generator is provided. The housing including: a hollow cylindrical body having an interior surface; and a cooling channel including a lattice structure integrated in the hollow cylindrical body adjacent to the interior surface, the lattice structure configured to receive a cooling fluid.

### BRIEF DESCRIPTION OF THE DRAWINGS

Embodiments of the present invention can be more easily understood and further advantages and uses thereof more readily apparent, when considered in view of the description of the preferred embodiments and the following figures in which:
FIG. 1 is a perspective view of one embodiment of a housing for an electric generator with a cooling channel including a lattice structure integrated into the housing.
FIG. 2 is a cross-sectional view of the housing of FIG. 1 taken along line A-A.
FIG. 3 is a magnified view of a portion of the cross-sectional view of FIG. 2.
FIG. 4 is a cross-sectional view of the housing of FIG. 1 perpendicular to the cross-sectional view of FIG. 2 taken along line B-B.
FIG. 5 is a magnified view of a portion of the cross-sectional view of FIG. 4.
FIG. 6 is a perspective view of four embodiments of a lattice structure for use in the housing of FIG. 1.
FIG. 7 is a perspective view of a portion of a cooling channel without a lattice structure.
FIG. 8 is a perspective view of a lattice structure, based on a gyroid, for use in the housing of FIG. 1 that illustrates the surface area of the lattice structure to be used to dissipate heat.
FIG. 9 is a perspective view of a portion of one embodiment of a lattice structure with two layers of gyroids for use in the housing of FIG. 1.
FIGs. 10A to 10F are block diagrams that illustrate various embodiments for the flow of fluid in the housing of FIG. 1.
FIG. 11 is a cross-sectional view of one embodiment of an electric generator with a housing having an integrated cooling channel with a lattice structure integrated into the housing.
FIG. 12 is a flow chart for the process of manufacturing an electric generator having a housing with a cooling channel with a lattice structure integrated into the housing.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

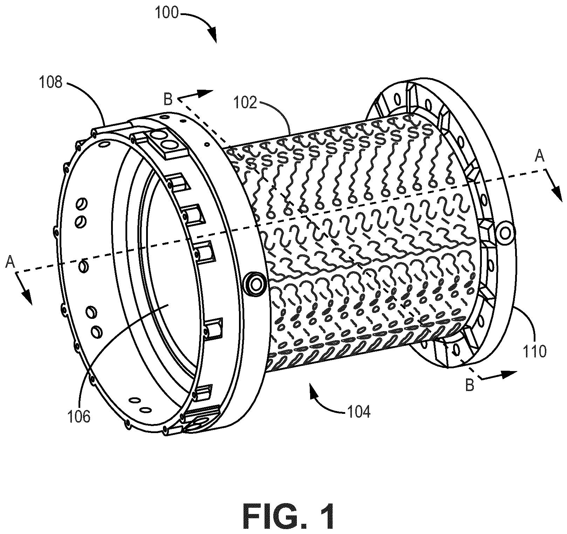

FIG. 1 is a perspective view of one embodiment of a housing 100 for an electric generator that includes cooling channel 102 that is integrated into the body of housing 100. Housing 100 includes a hollow cylindrical body 104 with an interior surface 106. For pedagogical purposes, solid portions of housing 100 extending between first end 108 and second end 110 of hollow cylindrical body 104 that would obscure cooling channel 102 are not shown in FIG. 1.

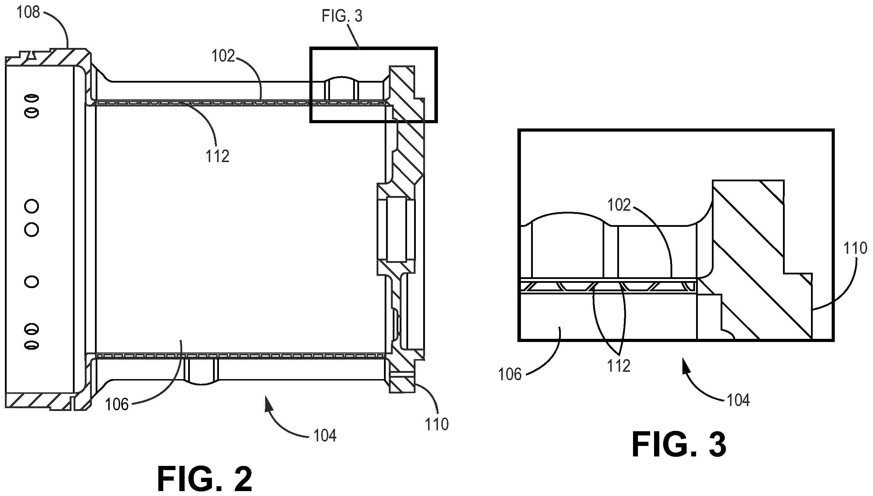

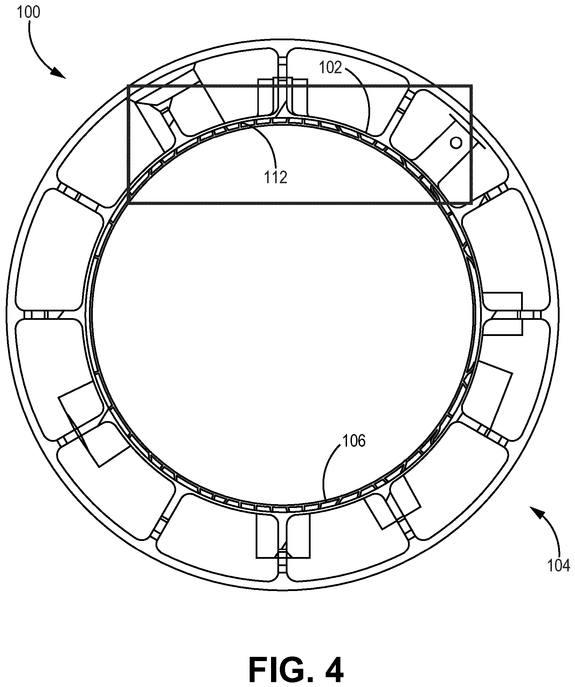

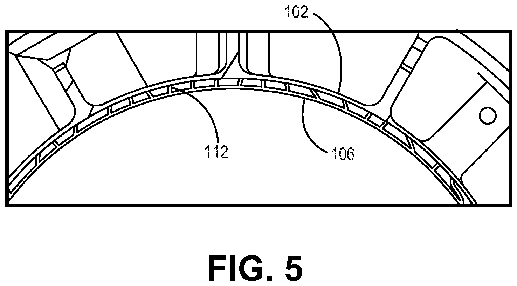

Cooling channel 102 includes a lattice structure that is integrated into housing 100 adjacent to interior surface 106. FIGs. 2 and 4 are cross sections of housing 100 of FIG. 1 taken along lines A-A and B-B, respectively. FIG. 2 illustrates a cross section of the lattice structure 112 of cooling channel 102 along the length of hollow cylindrical body 104. FIG. 4 illustrates a cross section of lattice structure 112 around a perimeter of hollow cylindrical body 104. Further, FIGs. 3 and 5 are magnified views of portions of the cross-sectional views of FIG. 2 and FIG. 4, respectively. These figures further illustrate the lattice structure 112 that is disposed in cooling channel 102 between interior surface 106 and the remainder of hollow cylindrical body 104.

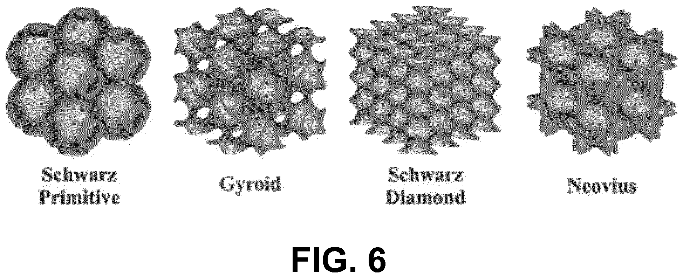

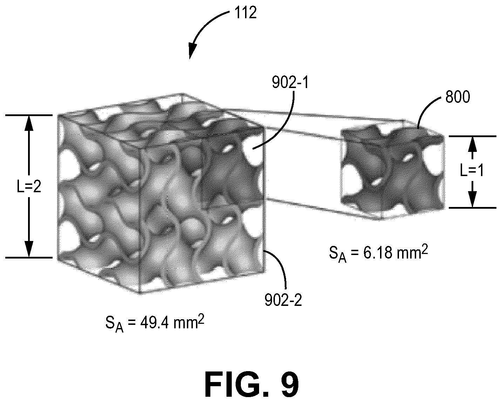

In the embodiments shown and described below, the lattice structure 112 includes a plurality of unit cells based on a triply periodic minimal surface (TPMS) such as a gyroid. For purpose of this specification, TPMS means a minimal surface in R3 that is invariant under a rank-3 lattice of translations. Many TPMS structures are known and may be used to form lattice structure 112. For example, FIG. 6 illustrates four known TPMS structures that can be used to form lattice structure 112, such as the gyroid, Shwarz Primitive, Schwarz diamond, and Neovius. Each TPMS structure in FIG. 6 includes a unit cell (basic shape of the TPMS) that may be placed end-to-end and repeated in one or more layers (multiple layers are shown in the examples in FIG. 9) to form the lattice structure 112. The embodiments shown in FIG. 6 are shown by way of example and not by way of limitation. Further, other structures that provide the benefits derived from the use of TPMS-based lattice structures (described below) are also intended to be included within the meaning of lattice structures for purposes of this specification.

Advantageously, a lattice structure based on a TPMS provides improved heat transfer for the electric generator, while maintaining structural integrity for housing 100. Compared to conventional cooling channels, the lattice structure 112 in cooling channel 102 based on TPMS provides complex flow patterns inside the pores and enables interactions of cooling fluids in the TPMS structure with the surfaces of lattice structure 112 thereby enhancing heat transfer. The surface area in TPMS structures is also high for the given mass compared to other lattice structures, as discussed in more detail below, which contributes to the improved heat transfer.

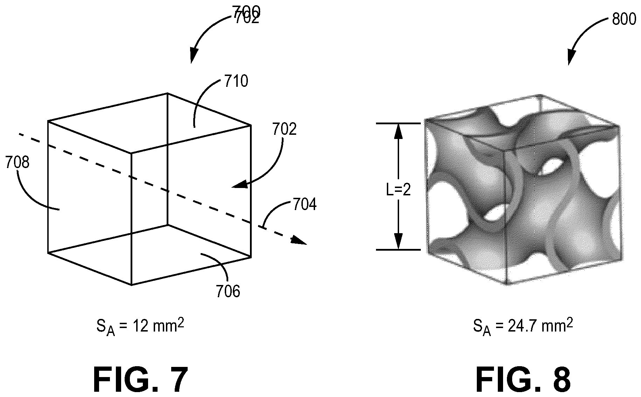

To establish a baseline for comparison of the surface area of a particular cooling channel, FIG. 7 is a perspective view of a portion of a cooling channel 700. In this example, channel 700 has a cross-sectional shape of a square indicated at 702. Cooling fluid flows through channel 700 in a direction indicated by arrow 704. As the cooling fluid flows through cooling channel 700 the cooling fluid interacts with the surface area of cooling channel 700. This surface area includes sides 708 and 710 as well as bottom 706 of cooling channel 700. Assuming that this portion (unit) of cooling channel 700 is 2 mm in each direction, then the surface area of cooling channel 700 that interacts with (e.g., provides a surface for heat transfer) the cooling fluid is 12 mm² (bottom 706 and sides 708 and 710 each have a surface area of 4 mm² giving a total surface area of 3 × 4 = 12 mm²). In contrast, as shown by gyroid lattice structure of unit cell 800 in FIG. 8, the surface area of a similarly sized gyroid (2 mm on each side) has a surface area of approximately 24.7 mm². Thus, in the same space, a gyroid lattice structure of unit cell 800 provides over twice the surface area for heat transfer compared to a similarly sized portion of a conventional cooling channel 700 with a square cross section 702.

Additionally, housing 100 is sufficiently stiff or rigid compared to conventional housings of similar size and material despite integrating the lattice structure 112 in cooling channel 102 in place of what would be solid material in a conventional housing. The heat transfer property of TPMS structures enables a small fraction of existing housing thickness to be converted into the lattice-based cooling channel 102 without compromising the structural capability of housing 100. For example, in one embodiment, 14 percent of the volume of housing 100 is used for cooling channel 102 and lattice structure 112. In one embodiment, the lattice structure 112 is approximately 0.04 inches thick with a cell size of approximately 0.9 inches.

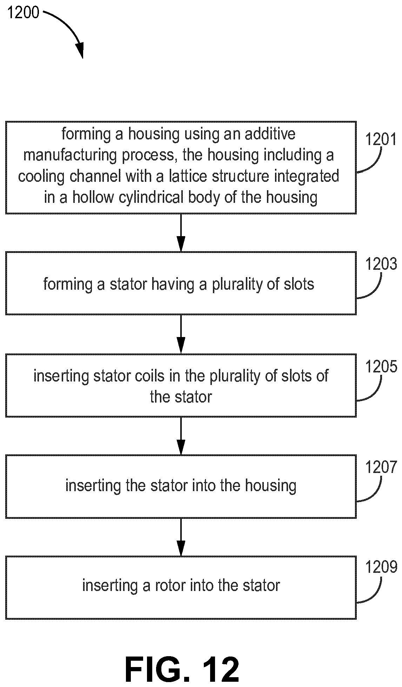

As described below with respect to FIG. 12, in one embodiment, housing 100 is formed using additive manufacturing (also known as 3D printing). This use of additive manufacturing enables fabrication of the housing with the integrated lattice structure having, for example, a cooling channel with the lattice structure based on unit cells of TPMS structures. Table 1 below is a list of a group of exemplary materials that can be selected for use for fabricating housing 100. Table 1 also indicates in each row an appropriate maximum operating temperature for the housing 100 when fabricated using the material indicated.

**Table 1**

| Material | Maximum Operating Temperature |
|---|---|
| Inconel 625 (IN625) - alloy of Nickel-chromium-molybdenum. | 1000 F |
| Inconel 718 (IN718) - alloy of Nickel, chromium, iron, molybdenum along with other elements such as Titanium, Aluminum, Cobalt, and Manganese. | 1000 F |
| Haynes 282 (HA282) - Alloy of Nickel, Chromium, Cobalt, Tungsten, and Molybdenum. | 1500 F |
| Ti-6Al-4V - composition of Titanium, Aluminum, Vanadium, Iron, and Oxygen. | 800 F |
| Al F357 - Aluminum Silicon alloy. | 400 F |
| Polymers | 300 F |

Any material (e.g., a metal) that is susceptible of being used in an additive manufacturing process (e.g., 3D printed) can be used to manufacture the housing with an integrated cooling channel with a lattice structure.

In some embodiments, cooling channel 102 includes a lattice structure 112 that includes multiple layers of the unit cells 800. For example, as shown in FIG. 9, in one embodiment, lattice structure 112 includes two or more layers 902 of unit cells 800 that form the lattice structure 112 in cooling channel 102. With reference to the analysis above with respect to FIGs. 7 and 8, this embodiment of lattice structure 112 includes 8 one micron by one micron gyroid unit cells in the same 8 mm³ space providing approximately 49.4 mm² of surface area of heat transfer.

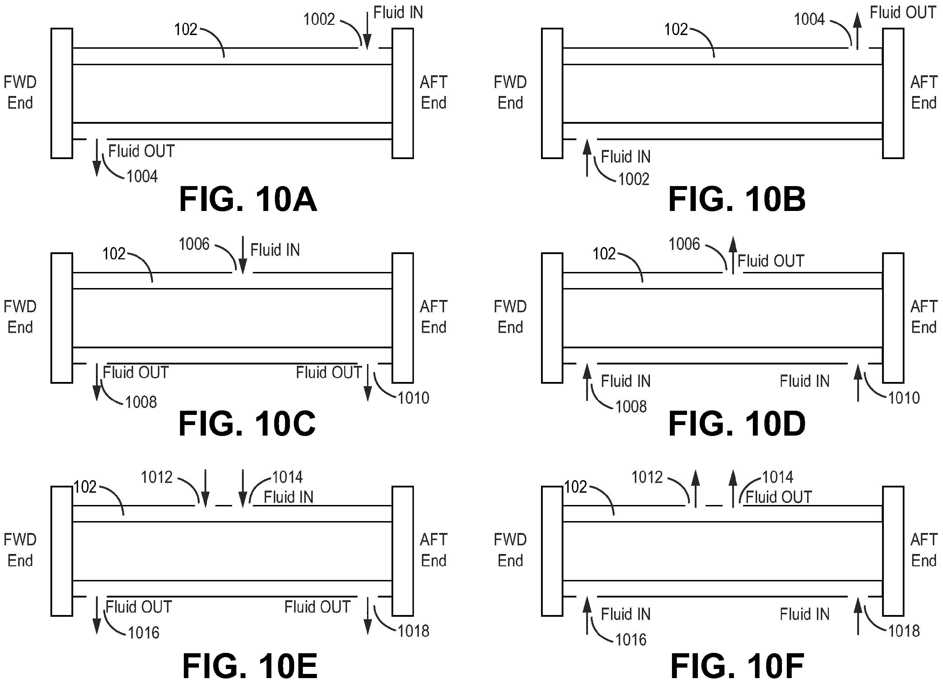

FIGs. 10A to 10F are block diagrams that illustrate various embodiments for the flow of fluid in the housing 100 of FIG. 1. In each embodiment, at least one port is provided to receive fluid for cooling channel 102. Additionally, at least one port is also provided to enable fluid to flow out of cooling channel 102. In this manner, cooling fluid is enabled to circulate through the lattice structure 112 of cooling channel 102 to enable heat transfer for an electric generator. Several different orientations of input and output ports for the cooling fluid and cooling channel 102 are envisioned. Example embodiments are shown in FIGs. 10A to 10F and described below.

For example, in FIGs. 10A and 10B, a single port 1002 receives fluid at one end of cooling channel 102 and a single port 1004 enables fluid to exit at the other end of cooling channel 102. In another example, a single port 1006 is provided in fluid communication with the middle of cooling channel 102 while two additional ports, 1008 and 1010, are provided in fluid communication with the ends of cooling channel 102. In FIG. 10C, port 1006 provides the cooling fluid to cooling channel 102 and ports 1008 and 1010 enable cooling fluids to exit from cooling channel 102. Conversely, in FIG. 10D, ports 1008 and 1010 provide cooling fluid to cooling channel 102 while port 1006 enables cooling fluids to exit from cooling channel 102. Finally, in FIGs. 10E and 10F, two ports, 1012 and 1014, are provided in fluid communication with the middle of cooling channel 102 while two additional ports, 1016 and 1018, are provided in fluid communication with the ends of cooling channel 102. In FIG. 10E, ports 1012 and 1014 provide cooling fluid to cooling channel 102 and ports 1016 and 1018 enable cooling fluid to exit from cooling channel 102. Conversely, in FIG. 10F, ports 1016 and 1018 provide cooling fluid to cooling channel 102 while ports 1012 and 1014 enable cooling fluids to exit from cooling channel 102.

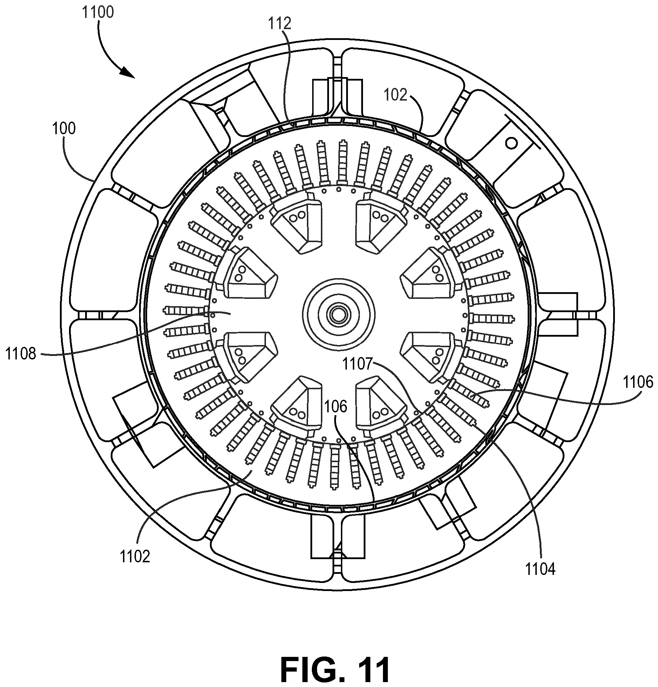

FIG. 11 is a cross-sectional view of one embodiment of an electric generator 1100 with a housing 100 having an integrated cooling channel 102 with a lattice structure 112 integrated into the housing 100. Electric generator 1100 includes housing 100. Stator 1102 is disposed within housing 100. Stator 1102 includes a plurality of stator slots 1104 that are disposed around an interior perimeter 1107 of stator 1102. Each stator slot 1104 is adapted to be filled with a stator coil 1106. Cooling channel 102 surrounds stator 1102. Advantageously, cooling channel 102 of housing 100 is configured to receive cooling fluid. Cooling channel 102 is constructed as described above with respect to one or more of FIGs. 1-6, 8, 9, and 10A-10F. Cooling channel 102 is integrated into housing 100 and includes a lattice structure 112 that increases the heat transfer characteristics of cooling channel 102. Further, incorporating the lattice structure 112 in housing 100 does not materially degrade the strength of the structure of housing 100 while providing improved heat transfer compared to conventional structures.

FIG. 12 is a flow chart for a method 1200 of manufacturing an electric generator having a housing with a cooling channel with a lattice structure integrated into the housing. For example, electric generator 1100 of FIG. 11 with a housing 100 can be manufactured using method 1200 to create an electric generator with a housing 100 having a cooling channel 102 with a lattice structure 112 integrated into housing 100.

Method 1200 begins at block 1201 where a housing is formed using additive manufacturing (also known as 3D printing). Advantageously, the use of an additive manufacturing process enables housing 100 to be formed with cooling channel 102 with lattice structure 112 integrated into a hollow cylindrical body of housing 100. As described above, method 1200 may use one or more of the materials identified above in Table 1 for the additive manufacturing process to form housing 100. To complete the electric machine, method 1200 also forms a stator having a plurality of slots at block 1203. Further method 1200 inserts stator coils in the plurality of slots of the stator at block 1205. At block 1207, method 1200 inserts the stator with the stator coils into the housing. Finally, the rotor is inserted into the stator. Thus, method 1200 uses additive manufacturing to provide the electric generator with an improved ability to transfer heat produced by the operation of the generator by incorporating the lattice structure into the cooling channel and integrating that cooling channel into the body of the housing itself.

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

Example 1 includes a housing for an electric generator, the housing including: a hollow cylindrical body having an interior surface; and a cooling channel including a lattice structure integrated in the hollow cylindrical body adjacent to the interior surface, the lattice structure configured to receive a cooling fluid.

Example 2 includes the housing of Example 1, wherein the lattice structure includes unit cells based on triply periodic minimal surfaces.

Example 3 includes the housing of Example 2, wherein the triply periodic minimal surfaces of the unit cells are based on one of gyroids, Schwarz primitives, Shwarz diamonds, and Neovius.

Example 4 includes the housing of any of Examples 2 or 3, wherein the cooling channel includes a plurality of layers of unit cells.

Example 5 includes the housing of Example 4, wherein the cooling channel comprises 14 percent of a volume of the hollow cylindrical body.

Example 6 includes the housing of Example 5, wherein a thickness of the lattice structure is approximately Example 0.04 inches and a size of each of the unit cells is Example 0.9 inches.

Example 7 includes the housing of any of Examples 3 to 6, wherein the hollow cylindrical body is formed from a material; wherein the material is selected from the group consisting of a Nickel Alloy, a composition with Titanium, an Aluminum Alloy, or a selected polymer; wherein the selection is based on an intended maximum operating temperature of the electric generator.

Example 8 includes the housing of any of Examples 3 to 6, wherein the hollow cylindrical body, including the cooling channel and the lattice structure, are formed from a metal that is susceptible to be used in an additive manufacturing process.

Example 9 includes the housing of any of examples 1 to 8, and further including: at least one port configured to receive the cooling fluid, the at least one port in fluid communication with the cooling channel, and at least one port configured to be in fluid communication with the cooling channel to enable exit of the cooling fluid from the cooling channel.

Example 10 includes an electric generator, comprising: a housing; a stator disposed in the housing; a rotor, disposed in the stator; and a plurality of stator coils disposed in a plurality of slots in the stator; wherein the housing includes: a hollow cylindrical body having an interior surface; and a cooling channel including a gyroid lattice structure integrated in the hollow cylindrical body adjacent to the interior surface, the gyroid lattice structure configured to receive a cooling fluid.

Example 11 includes the electric generator of Example 10, wherein the cooling channel includes a plurality of layers of gyroid cells.

Example 12 includes the electric generator of any of Examples 10 or 11, wherein the cooling channel comprises 14 percent of a volume of the hollow cylindrical body.

Example 13 includes the electric generator of Example 12, wherein a thickness of the gyroid lattice structure is approximately Example 0.04 inches and a size of each gyroid cell is Example 0.9 inches.

Example 14 includes the electric generator of any of Examples 10 to 13, wherein the hollow cylindrical body is formed from a material; wherein the material is selected from the group consisting of a Nickel Alloy, a composition with Titanium, an Aluminum Alloy, or a selected polymer; wherein the selection is based on an intended maximum operating temperature of the electric generator.

Example 15 includes a method for forming an electric generator, the method comprising: forming a housing using an additive manufacturing process, the housing including a hollow cylindrical body having an interior surface and a cooling channel, wherein the cooling channel includes a lattice structure integrated in the hollow cylindrical body adjacent to the interior surface, the lattice structure configured to receive a cooling fluid; forming a stator having a plurality of slots; inserting stator coils in the plurality of slots of the stator; inserting the stator into the housing; and inserting a rotor into the stator.

Example 16 includes the method of Example 15, wherein forming the housing includes forming the lattice structure with a plurality of layers of unit cells based on triply periodic minimal surfaces.

Example 17 includes the method of any of Examples 15 or 16, wherein forming the housing comprises forming the cooling channel such that the cooling channel comprises 14 percent of a volume of the hollow cylindrical body.

Example 18 includes the method of any of Examples 15 to 17, wherein forming the housing comprises forming the lattice structure with. unit cells based on one of gyroids, Schwarz primitives, Shwarz diamonds, and Neovius.

Example 19 includes the method of any of Examples 15 to 18, wherein forming the housing comprises forming the hollow cylindrical body from a material; wherein the material is selected from the group consisting of a Nickel Alloy, a composition with Titanium, an Aluminum Alloy, or a selected polymer; wherein the selection is based on an intended maximum operating temperature of the electric generator.

Example 20 includes the method of any of Examples 15 to 19, and further including: forming at least one port configured to receive the cooling fluid, the at least one port in fluid communication with the cooling channel, and forming at least one port configured to be in fluid communication with the cooling channel to enable exit of the cooling fluid from the cooling channel.

## Claims

1. A housing for an electric generator, the housing comprising:
a hollow cylindrical body having an interior surface; and
a cooling channel including a lattice structure integrated in the hollow cylindrical body adjacent to the interior surface, the lattice structure configured to receive a cooling fluid.

2. The housing of claim 1, wherein the lattice structure includes unit cells based on triply periodic minimal surfaces.

3. The housing of claim 2, wherein the triply periodic minimal surfaces of the unit cells are based on one of gyroids, Schwarz primitives, Shwarz diamonds, and Neovius.

4. The housing of claim 2, wherein the cooling channel includes a plurality of layers of unit cells.

5. The housing of claim 3, wherein the hollow cylindrical body is formed from a material;
wherein the material is selected from the group consisting of a Nickel Alloy, a composition with Titanium, an Aluminum Alloy, or a selected polymer;
wherein the selection is based on an intended maximum operating temperature of the electric generator.

6. The housing of claim 3, wherein the hollow cylindrical body, including the cooling channel and the lattice structure, are formed from a metal that is susceptible to be used in an additive manufacturing process.

7. A method for forming an electric generator, the method comprising:
forming a housing using an additive manufacturing process, the housing including a hollow cylindrical body having an interior surface and a cooling channel, wherein the cooling channel includes a lattice structure integrated in the hollow cylindrical body adjacent to the interior surface, the lattice structure configured to receive a cooling fluid;
forming a stator having a plurality of slots;
inserting stator coils in the plurality of slots of the stator;
inserting the stator into the housing; and
inserting a rotor into the stator.

8. The method of claim 7, wherein forming the housing includes forming the lattice structure with a plurality of layers of unit cells based on triply periodic minimal surfaces.

9. The method of claim 7, wherein forming the housing comprises forming the lattice structure with. unit cells based on one of gyroids, Schwarz primitives, Shwarz diamonds, and Neovius.

10. The method of claim 7, wherein forming the housing comprises forming the hollow cylindrical body from a material;
wherein the material is selected from the group consisting of a Nickel Alloy, a composition with Titanium, an Aluminum Alloy, or a selected polymer;
wherein the selection is based on an intended maximum operating temperature of the electric generator.
